(19) Europäisches Patentamt
European Patent Office
Office européen des brevets

(11) Publication number: **0 190 892 B1**

# (12) EUROPEAN PATENT SPECIFICATION

(45) Date of publication of patent specification: **13.11.91**

(51) Int. Cl.[5]: **C08F 2/22**, C08F 220/04, C09D 4/00

(21) Application number: **86300668.0**

(22) Date of filing: **31.01.86**

## (54) Process for the preparation of an aqueous dispersion of copolymeric latex polymer.

(30) Priority: **04.02.85 US 697822**

(43) Date of publication of application:
**13.08.86 Bulletin 86/33**

(45) Publication of the grant of the patent:
**13.11.91 Bulletin 91/46**

(84) Designated Contracting States:
**AT BE CH DE FR GB IT LI LU NL SE**

(56) References cited:
**EP-A- 0 013 836**
**US-A- 4 384 096**
**US-A- 4 421 902**

(73) Proprietor: **ROHM AND HAAS COMPANY**
**Independence Mall West**
**Philadelphia Pennsylvania 19105(US)**

(72) Inventor: **Chang, Ching-Jen**
**16 Farber Drive**
**Chalfont, Pa. 18914(US)**

(74) Representative: **Angell, David Whilton et al**
**ROHM AND HAAS (UK) LTD. European Operations Patent Department Lennig House 2**
**Mason's Avenue**
**Croydon CR9 3NB(GB)**

EP 0 190 892 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention is concerned with a process for the preparation of an aqueous dispersion of copolymeric latex polymer for use as a thickener in aqueous systems.

Salts of polyacrylic acid and polymethacrylic acid are well known as thickeners for various aqueous systems. However, these thickening agents are difficult to handle. They are either powders that are slow to dissolve or very viscous aqueous solutions. Another problem associated with these polymeric thickeners is their sensitivity to electrolytes. Aqueous systems thickened with polyacid thickeners such as polyacrylic acid decrease substantially in viscosity and upon addition of electrolytes such as sodium chloride.

Polymeric thickeners which are copolymers prepared from carboxylic acid monomers such as methacrylic acid and non-ionizable, relatively hydrophobic comonomers, such as the lower alkyl acrylates, are disclosed, for example, in British Patent No. 870,974 and U.S.-A-3,035,004. These stable aqueous dispersions of latex emulsion copolymers provide thickening upon neutralization as do homopolymers of carboxylic acid monomers. These copolymer emulsions have solids concentration of from about 25 to 50% by weight, but are low viscosity fluids and thus are readily added to the aqueous system to be thickened. However, these copolymeric thickeners also suffer from electrolyte sensitivity.

A related class of polymer thickeners is taught in U.S.-A-4,384,096, which discloses terpolymers of (a) carboxylic acid monomer, (b) nonionic copolymerizable alpha, beta-ethylenically unsaturated comonomer, preferably a monovinyl ester such as ethyl acrylate, styrene, acrylonitrile, vinyl chloride or vinyl acetate or mixtures thereof, and (c) certain copolymerizable nonionic vinyl surfactant esters. Like copolymeric thickeners prepared from carboxylic acid monomer and lower alkyl acrylates, these terpolymers give emulsion copolymers which are stable as aqueous colloidal dispersion at low pH, but which in response to neutralization yield high viscosity, thickened compositions. These thickeners may be referred to as hydrophobe-containing alkali soluble or swellable emulsion (HASE) copolymers. These emulsion terpolymer thickeners are solubilized or swollen by the addition of base and are very high efficiency thickeners which show improved tolerance to electrolytes in comparison with homopolymers of ethylenically unsaturated carboxylic acids and the copolymers of such acids with the lower alkyl acrylates. U.S.-A-4,384,096 discloses nonionic surfactant monomer (hydrophobe) of the formula

$$R^1\text{-O-}(C_2H_4O)_n\text{-C(O)-C}(R^2)=CH_2$$

where $R^1$ is an alkyl group, having 12 to 21 carbon atoms, $R^2$ is H or $CH_3$, and n is an integer having a value of at least 2. Optionally, a small amount of polyethylenically unsaturated monomer may also be copolymerized with the mono-ethylenically unsaturated monomer.

U.S.-A-4,421,902, U.S.-A-4,423,199 and U.S.-A-4,429,097 disclose hydrophobe-containing alkali soluble or swellable emulsion (HASE) copolymeric thickeners prepared from other types of surfactant comonomers. Typical aqueous systems which may be thickened using HASE thickeners include paint latices, printing paste for textiles, cosmetic preparations, food preparations, ionic detergents, pharmaceuticals, and oil rig drilling fluid.

The present invention enables the provision of aqueous dispersions of hydrophobe-containing alkali soluble or swellable emulsion (HASE) copolymers which exhibit enhanced thickening efficiency in comparison with prior art copolymers, and which may have the advantage that a reduced quantity of HASE thickener prepared by the process of the present invention is required to achieve a fixed level of thickening in comparison with the amount of HASE thickener prepared by a process taught by the prior art. Also, textile printing paste compositions, thickened with HASE thickeners prepared according to the present invention, may have improved rheology in comparison to similar compositions thickened with HASE thickeners prepared according to the prior art processes.

The present invention provides a process for the preparation of an aqueous dispersion of copolymeric latex polymer, said process comprising emulsion-polymerizing alpha, beta-ethylenically unsaturated monomer in an aqueous medium, wherein at least some portion of the polymerization occurs in the presence of 3% to 20% by weight based on total monomer of at least one in-process additive selected from the group consisting of $(C_4\text{-}C_{12})$alkanols, benzene, toluene, the di$(C_1\text{-}C_2)$alkyl benzenes, and

$$(CH_3)_2CHCO_2CH_2C(CH_3)_2CH(OH)CH(CH_3)_2$$

wherein said monomer comprises at least one copolymerizable alpha, beta-ethylenically unsaturated surfactant comonomer, at least one copolymerizable alpha, beta-mono-ethylenically unsaturated carboxylic acid comonomer, and at least one comonomer selected from nonionic copolymerizable $(C_2\text{-}C_{12})$ alpha,

beta-ethylenically unsaturated monomer.

The in-process additive employed preferably has a molecular weight of less than about 500. The additive preferably has a solubility parameter with a value of from about 8.5 to 11.5 $(cal/cm^3)^{\frac{1}{2}}$ $(1.74 \times 10^{-2}$-$(Jm^{-3})^{\frac{1}{2}}$ to $2.36 \times 10^{-2}(Jm^{-3})^{\frac{1}{2}})$. It is more preferred that the solubility parameter of the additive have a value of from about 9.5 to about 10.5 $(cal/cm^3)^{\frac{1}{2}}$ $(1.95 \times 10^{-2} (Jm^{-3})^{\frac{1}{2}}$ to $2.15 \times 10^{-2}(Jm^{-3})^{\frac{1}{2}}$. It is preferred that the in-process additive be selected from the $(C_4$-$C_{12})$alkanols, benzene, toluene, the di$(C_1$-$C_2)$-alkyl benzenes, and

$(CH_3)_2CHCO_2CH_2C(CH_3)_2CH(OH)CH(CH_3)_2$.

Preferably the surfactant comonomer is selected from the compounds of the formula

$H_2C=C(R)$-$C(O)$-$O$-$[C(R^1)H$-$CH_2$-$O$-$]_n$-$R^2$

wherein R is H or $CH_3$; $R^1$ is H or $CH_3$; n is at least 2;

$R^2$ is selected from the group consisting of alkyl, aralkyl, alkylaryl, alkylaralkyl, and polycyclic alkyl hydrocarbyl groups having from 12 to 30 carbon atoms. The average value of n is preferably from 10 to 60. Preferably the copolymerizable mono-ethylenically unsaturated carboxylic acid monomer is selected from $(c_3$-$C_8)$-ethylenically unsaturated carboxylic acid monomers and salts thereof. The copolymerizable mono-ethylenically unsaturated carboxylic acid monomer may be selected from acrylic acid, methacrylic acid, itaconic acid, maleic acid, fumaric acid, citraconic acid, crotonic acid, beta-acryloxypropionic acid, and mixtures of beta-acryloxypropionic acid and higher oligomers of acrylic acid, and mixtures thereof. A nonionic comonomer selected from the nonionic copolymerizable $(C_2$-$C_{12})$ alpha, beta-ethylenically unsaturated monomers is also included in the alpha, beta-ethylenically unsaturated monomer used in the emulsion polymerization yielding the aqueous dispersion of copolymeric latex polymer of the present invention. Nonionic comonomer is preferably selected from the $(C_1$-$C_4)$alkyl esters of acrylic acids and methacrylic acids.

In one embodiment the aqueous dispersion of copolymeric latex polymer is prepared from a process comprising emulsion-polymerizing alpha, beta-ethylenically unsaturated monomer in an aqueous medium wherein the copolymeric latex is prepared from

(a) 0.5 to 25 weight percent of surfactant comonomer wherein said surfactant comonomer is selected from the compounds of the formula

$H_2C=C(R)$-$C(O)$-$[C(R^1)HCH_2$-$O$-$]_n$-$R^2$

wherein R is H or $CH_3$; $R^1$ is H or $CH_3$; n is at least 2; and $R^2$ is selected from the group consisting of alkyl, aralkyl, alkylaryl, alkylaralkyl and polycyclic alkyl hydrocarbyl groups having 12 to 30 carbon atoms;

(b) 20 to 50 weight percent of copolymerizable mono-ethylenically unsaturated carboxylic acid monomer selected from acrylic acid, methacrylic acid, fumaric acid, citraconic acid, crotonic acid, beta-acryloxypropionic acid and mixtures of beta-acryloxypropionic acid and higher oligomers of acrylic acid, and mixtures thereof and,

(c) at least 30 weight percent of comonomer selected from the $(C_1$-$C_4)$alkyl esters of acrylic and methacrylic acid.

In this embodiment the copolymeric latex polymer is preferably prepared from monomer additionally comprising from 0.01 to 1.0 percent by weight of multi-alpha, beta-ethylenically unsaturated monomer or 0.5 to 5 percent by weight of post-crosslinkable ethylenically unsaturated monomer. The multi-alpha, beta-ethylenically unsaturated monomer may be selected from allyl methacrylate and diallylphthalate. The post-crosslinkable ethylenically unsaturated monomer is preferably methylol acrylamide. In this embodiment the copolymeric latex is preferably prepared from

(a) 5.0 to 20 weight percent of at least one surfactant comonomer of the formula

$$CH_3(CH_2)_{17}O\text{-}[CH_2CH_2\text{-}O\text{-}]_n\text{-}C(O)\text{-}C(CH_3)=CH_2$$

wherein n is an integer of from 10 to 30;

(b) 30 to 50 weight percent of methacrylic acid, and

(c) 30 to 65 weight percent of ethyl acrylate wherein the sum of the weight percent components (a), (b), and (c) and multi-alpha, beta-ethylenically unsaturated monomer is 100%.

While this invention is not limited to any particular explanation thereof, it is believed that the in-process additive employed in the process of this invention alters the phase distribution of the monomers employed during the polymerization and the phase distribution of the nonionic surfactant monomers in particular. It is believed that a strong interaction between the water-insoluble and moderately hydrophobic additive and the hydrophobe of surfactant monomer shift the distribution of surfactant monomer from the aqueous phase and aqueous-polymer interface to the aqueous-polymer interface and the polymer phase. This is believed to result in a more uniform incorporation of surfactant monomer and to lead to increased thickener efficiency. It is believed that additives which are more hydrophilic than those of the present invention are too water-soluble to significantly affect the phase distribution. It is also believed that additives which are more hydrophobic than those of the present invention are ineffective because of their incompatibility with the latex polymer. In the absence of a surfactant monomer, and in the presence of an insufficient hydrophobic surfactant monomer, the phase distribution of monomers may also be affected by the in-process additive. However, in these cases the viscosity of the thickener composition prepared using an aqueous dispersion of copolymeric latex prepared in the presence of the in-process additive may be less than thickener employing copolymerizable thickeners prepared by a corresponding process in the absence of the additive. However, other rheological characteristics of these classes of thickeners and the corresponding thickened coatings compositions may be advantageously altered.

The process of the present invention may be useful in preparing lightly crosslinked HASE thickeners with increased efficiency in comparison with prior art thickeners, particularly thickeners for textile printing applications.

The HASE thickeners of the present invention may also be referred to as associative thickener compositions. It is believed that hydrophobe-hydrophobe association between hydrophobes which form a portion of the residues of the nonionic surfactant comonomer on the HASE polymer is related to the characteristic rheological properties of these thickeners.

HASE thickener preparations are described in general in U.S.-A-4,384,096, U.S.-A-4,421,902, U.S.-A-4,423,199, U.S.-A-4,429,097 and U.S.-A-4,464,524.

In the process of the present invention the in-process additive may be added to the polymerization mixture at any time before or during the polymerization process. The addition of the in-process additive to the polymerization mixture may be incremental or continuous. Addition of the additive may begin at any time during the polymerization. Addition may be made at constant or varying rate or rates during the polymerization process. The addition of the additive may be terminated or interrupted during the polymerization of the latex polymer.

The latex polymer, which is provided in aqueous dispersion by the copolymerization process, is a useful thickener and is conveniently used in aqueous dispersion either as such or further formulated with ingredients such as surfactants, colorants, preservatives, dyes, defoamers, coating agents. Surfactant cothickening is described, for example, in U.S.-A-4,421,902 and U.S.-A-4,423,199. The HASE thickener may be prepared in the presence of those of the above-mentioned ingredients which do not significantly affect the polymerization process, as for example, some dyes or preservatives. Thus the aqueous dispersion of copolymeric latex polymer and the formulated thickener composition may be employed in preparing thickened aqueous coating compositions. In addition to the latex polymer of the present invention, the thickened coatings compositions may additionally comprise at least one additional latex polymer. The additional latex polymer may itself be a film-forming material or may be capable of forming a film in the presence of additional components of the thickened coatings compositions such as monomeric plasticizers, polymeric plasticizers, coalescents, et al. The additional latex polymer preferably has a glass transition of less than about 30°C. Among the types of aqueous coatings compositions which may be thickened by the latex polymer of the present invention are architectural coatings compositions and paper coatings compositions. The latex polymer of the present invention may be employed to thicken aqueous coating compositions by adding the latex polymer, preferably in aqueous dispersion, to the coating composition at a pH of about 4 or less and subsequently neutralizing the acid groups of the latex polymer by raising the pH of the aqueous coating compositions to at least 7. Preferably the latex polymer is soluble in the aqueous phase upon neutralization. While a variety of basic materials may be used to adjust the pH of the aqueous coating composition, it is preferred that the pH of the aqueous coating composition be raised by the addition of a base selected from ammonia, the alkali and alkaline earth hydroxides and the basic salts of weak acids. In addition to their use as in-process additives during the formulation of the latex polymers of the present

invention, the additives may be employed to adjust the viscosity of an aqueous solution thickened with HASE thickener. HASE thickener may be prepared by the process of the present invention or by another process such as those disclosed in U.S.-A-4,384,096, U.S.-A-4,421,902 or U.S.-A-4,423,199.

Unless otherwise stated, all percentages in the present specification and claims are by weight.

The following examples illustrate the effect of in-process additive on the viscosity enhancement of HASE thickeners; however, the present invention is in no way limited thereby.

Preparation of HASE Thickener (Process A)

An emulsion of monomers in water is prepared by mixing 531 g of ethyl acrylate, 424.9 g of methacrylic acid, 106.2 g of stearyl$(EO)_{20}$ methacrylate (EO = Ethylene Oxide), 28.4 g of 28% sodium lauryl sulfate, and 679.5 g of water. To a reaction vessel containing 28.4 g of 28% sodium lauryl sulfate in 1467 g of water at 86°C there is added 5% of the monomer emulsion and 91.1 g of 1.25% ammonium persulfate solution. After the initial charge had polymerized at 86°C, the remaining monomer emulsion and 50.5 g of 1% ammonium persulfate solution are gradually added over a period of one hour at 86°C. After completion of monomer and initiator feed, the mixture is held at 86°C for 15 minutes and then 124.1 g of 0.33% ammonium persulfate solution is added. After another 15 minute hold at 86°C, the mixture is cooled and filtered. The filtrate is an approximately 30% solids emulsion copolymer dispersion in which the copolymer composition is 10% stearyl$(EO)_{20}$ methacrylate, 50% ethyl acrylate, and 40% methacrylic acid (Comparative Example 1 in Table I).

A series of latexes are prepared by Process A except that 53.1 g of water in monomer emulsion is replaced by the same amount of in-process additive. The aqueous viscosities upon neutralization with one equivalent of sodium hydroxide at 1% polymer solids are shown in Table I.

TABLE I

Effect of In-Process Additive On Thickener Viscosity

| Example | In-process Additive[2] | 1% Brookfield Viscosity,[1] cps ($Nm^{-2}S$) 12 rpm | 6 rpm |
|---|---|---|---|
| Comparative 1 | none | 33,200 (33.2) | 61,000 (61) |
| 1 | 5% n-butanol | 35,300 (35.3) | |
| 2 | 5% n-pentanol | 42,250 (42.25) | 71,300 (71.3) |
| 3 | 5% n-hexanol | >50,000 (>50) | 91,200 ( 91.2) |
| 3a[3] | 5% n-hexanol | >50,000 (>50) | >100,000 (>100) |
| 4 | 5% n-heptanol | >50,000 (>50) | 97,000 (97) |
| 5 | 5% 2-ethyl hexanol | >50,000 (>50) | >100,000 (>100) |

1. Spindle #4 at 70°F (21°C)
2. Weight % based on total monomer weight
3. Only 60% of ammonium persulfate in process A is used.

Each of Examples 1-5 exhibit increased viscosity over that of the corresponding Comparative Example 1.

Preparation of DAP Crosslinked HASE Thickener -Process (B)

An emulsion of monomers in water is prepared by mixing 118 g of ethyl acrylate, 94.5 g of methacrylic

acid, 23.6 g of stearyl$(EO)_{20}$ methacrylate, 0.47 g of diallylphthalate (DAP), 6.3 g of 28% sodium lauryl sulfate, and 271 g of water. To a reaction vessel containing 6.3 g of 28% sodium lauryl sulfate in 206 g of water at 86 °C there is added 5% of the monomer emulsion and 20.3 g of 1.25% ammonium persulfate solution. After the initial charge had polymerized at 86 °C, the remaining monomer emulsion and 28.7 g of 0.38% ammonium persulfate solution are gradually added over a period of one hour at 86 °C. After completion of monomer and initiator feed, the mixture is held at 86 °C for 15 minutes and then 10.1 g of 0.89% ammonium persulfate solution is added. After another 15 minute hold at 86 °C, the mixture is cooled and filtered. The filtrate is approximately 30% solids emulsion copolymer dispersion in which the copolymer composition is 10% stearyl$(EO)_{20}$ methacrylate, 50% ethyl acrylate, 40% methacrylic acid and 0.2% diallylphthalate (Comparative Example 2, Table II).

A series of latexes are prepared by Process B except that 11.8 g of water in monomer emulsion is replaced by the same amount of in-process additive. The aqueous viscosities upon neutralization with one equivalent of sodium hydroxide at 1% polymer solids are shown in Table II. Also shown in Table II are the viscosities of 1% polymer with post-addition of additives.

TABLE II

Comparison of Effect of In-Process Additive vs. Post-Addition

| Example | Additive[2] | Solubility Parameter $(cal/cm^3)^{1/2}$ $10^{-2}$ $(Jm^{-3})^{1/2}$ | 1% Brookfield Viscosity,[1] cps $(Nm^{-2}S)$ In-Process Addition | 1% Brookfield Viscosity,[1] cps $(Nm^{-2}S)$ Post-Addition |
|---|---|---|---|---|
| Comparative 2 | none | -- | 19,500 (19.5) | 19,500 (19.5) |
| 6 | 5% Texanol[3] | 8.2 (1.68) | 32,650 (32.65) | 24,200 (24.2) |
| 7 | 5% xylene | 8.8 (1.8) | 30,250 (30.25) | 20,100 (20.1) |
| 8 | 5% Varsol[4] | 7.8 (1.6) | 20,100 (20.1) | 19,150 (19.15) |
| 9 | 5% hexyl carbitol | 9.7 (1.99) | 23,000 (23) | 18,500 (18.5) |
| 10 | 5% butyl carbitol | 9.5 (1.95) | 22,650 (22.65) | 19,400 (19.4) |
| 11 | 5% carbitol | 10.2 (2.09) | 21,800 (21.8) | 19,000 (19) |
| 12 | 5% n-dodecanol | 9.8 (2.01) | 22,300 (22.3) | 17,500 (17.5) |
| 13 | 5% n-hexanol | 10.7 (2.19) | 29,700 (29.7) | |

1. Spindle #4 at 12 rpm at 70°F (21°C)
2. Weight % based on monomer weight
3. Texanol is a trademark of Eastman Organic Chemicals, Inc. for $(CH_3)_2CHCO_2CH_2C(CH_3)_2CH(OH)CH(CH_3)_2$.
4. Varsol is a trademark of Exxon Corp. for aliphatic hydrocarbon.

The use of the moderately hydrophobic additives, such as Texanol, xylene, and n-hexanol, during the polymerization process enhances the viscosity of the thickened composition in comparison with both post-addition of the additive and Comparative Example 2, in which no additive is present. For more hydrophilic additives such as hexyl carbitol, butyl carbitol, and carbitol and more hydrophobic additives such as Varsol and n-dodecanol in-process addition or post-addition of additives has little effect on thickener efficiency. However, it is also clear that post-addition of the additive enhances the viscosity of the thickened

composition in some of the Examples (Examples 6 and 7), but the viscosity enhancement is of a much smaller magnitude.

Preparation of ALMA Crosslinked HASE Thickener -(Process C)

A latex is prepared according to Process A except that a small amount of allyl methacrylate (ALMA) is included in the monomer emulsion and only 60% of ammonium persulfate is employed to give a copolymer of 10 stearyl$(EO)_{20}$ methacrylate, 50% of ethyl acrylate, 40% of methacrylic acid, and 0.05% based on total monomer weight of allyl methacrylate.

A series of latexes are prepared by Process C except that 3 to 5% of n-hexanol based on total weight of monomer is employed as in-process additive and allyl methacrylate level is varied from 0.05 to 0.2%. The aqueous viscosities upon neutralization with one equivalent of sodium hydroxide at 1% polymer solids are shown in Table III.

TABLE III

Effect of Crosslinker Level on Thickener Viscosity

| Example | % ALMA by weight | In-Process n-Hexanol[2] | 1% Brookfield Viscosity,[1] cps ($Nm^{-2}s$) |
|---|---|---|---|
| Comparative 3 | 0.05 | none | 24,650 (24.65) |
| 14 | 0.05 | 5% | 36,100 (36.1) |
| 15 | 0.1 | 5% | 27,000 (27) |
| 16 | 0.2 | 5% | 12,500 (12.5) |
| 16a[3] | 0.2 | 5% | 11,800 (11.8) |
| 17 | 0.1 | 3% | 17,100 (17.1) |

1. Spindle #4 at 12 rpm at 70°F (21°C)
2. Weight % based on monomer weight
3. Prepared by process A.

Comparison of the measured viscosity of solutions thickened with Example 14 with those thickened with Comparative Example 3 shows that in-process additive is effective in increasing the thickening efficiency of lightly crosslinked HASE thickener. Comparison of the viscosities of Examples 14, 15 and 16 shows that as crosslinker level increases, the thickening efficiency declines. However, at a fixed level of crosslinker, increasing the level of additive from 0 to 5% increases thickening efficiency (compare Example 17 with 15 and 14 with Comparative Example 3).

Effect of Varying Additive Level

A series of latexes are prepared by process B except that the in-process additive levels are varied from 5 to 20%. The aqueous viscosities upon neutralization with one equivalent of sodium hydroxide at 1% polymer solids are shown in Table IV.

TABLE IV

Effect of Varying Additive Level on Thickener Viscosity

| Example | In-process Additive[2] | 1% Brookfield Viscosity,[1] cps (Nm$^{-2}$S) |
|---|---|---|
| 6 | 5% Texanol | 32,650 (32.65) |
| 18 | 10% " | 45,000 (45) |
| 19 | 15% " | 28,750 (28.75) |
| 20 | 20% " | 37,000 (37) |
| 21 | 5% xylene | 30,250 (30.25) |
| 22 | 10% " | 23,400 (23.4) |

1. Spindle #4 at 12 rpm at 70°F (21°C)
2. Weight % based on monomer weight

The viscosity of the Examples in Table IV indicate that thickening efficiency goes through a maximum as the level of additive is increased.

Preparation of MOA Modified HASE Thickeners -(Process D)

A latex is prepared by Process B except that only 60% of ammonium persulfate is employed and copolymer has a composition of 10% stearyl(EO)$_{20}$ methacrylate, 48.1% ethyl acrylate, 40% methacrylic acid, and 1.9% MOA (50% methylolacrylamide and 50% acrylamide) - (Process D).

A series of latexes are prepared by Process D except that 5% of various in-process additives is included in the monomer emulsion. The aqueous viscosities upon neutralization with one equivalent of sodium hydroxide at 1% polymer solids are shown in Table V.

TABLE V

Effect of Varying In-Process Additive of Thickener Viscosity

| Example | In-process Additive[2] | 1% Brookfield Viscosity,[1] cps ($Nm^{-2}s$) 12 rpm | 6 rpm |
|---|---|---|---|
| Comparative 3 | none | 25,400 (25.4) | 55,500 (55.5) |
| 23 | 5% Texanol | 30,500 (30.5) | 62,000 (62) |
| 24 | 5% n-dodecanol | 28,950 (28.95) | 51,000 (51) |
| 25 | 5% n-decanol | >50,000 (>50) | 96,500 (96.5) |
| 26 | 5% n-octanol | >50,000 (>50) | >100,000 (>100) |
| 27 | 5% n-hexanol | >50,000 (>50) | 77,500 (77.5) |

1. Spindle #4 at 12 rpm at 70°F (21°C)
2. Weight % based on monomer weight

The viscosities reported in Table V suggest that when an alkanol is employed as in-process additive, the alkyl chain length may be a significant variable in maximizing thickener efficiency. In the case of the MOA-crosslinked HASE thickeners, the thickening efficiency is greatest when n-octanol is used as the in-process additive (Example 26).

A series of latexes are prepared by Process B except that copolymer compositions are varied. The

copolymer compositions and the aqueous viscosities upon neutralization with one equivalent of sodium hydroxide at 1 or 2% polymer solids are shown in Table VI. The example demonstrates that in-process additive effect is sensitive to thickener composition and can result in viscosity reduction.

TABLE VI

Effect of Thickener Monomer Composition on Thickener Viscosity

| Example | Composition[1] | In-Process Additive[2] | Brookfield Viscosity,[3] cps ($Nm^{-2}S$) % Solids | Visc. | |
|---|---|---|---|---|---|
| 28 | 10 lauryl$(EO)_{23}$methacrylate/ 50 EA/40 MAA | none | 1 | 2,015 | (2.015) |
| 29 | " | 5% Texanol | 1 | 1,245 | (1.245) |
| 30 | 60 EA/40 MAA | none | 1 | 93 | (0.093) |
| 31 | " | 5% Texanol | 1 | 38 | (0.038) |
| 32 | 3.75 stearyl$(EO)_{20}$methacrylate/ 1.25 lauryl$(EO)_{23}$methacrylate/ 50 EA/45 MAA//0.2 n-DDM | none | 2 | 5,000 | (5) |
| 33 | " | 5% Texanol | 2 | 4,590 | (4.59) |

1. EA = ethyl acrylate; MMA = methacrylic acid; n-DDM = n-dodecyl mercaptan
2. Weight % based on monomer weight
3. Spindle #4 at 12 rpm at 70°F (21°C).

An enhancement of thickening (herein termed "cothickening") is observed upon the addition of a surfactant to an aqueous system containing the emulsion copolymer of the invention, when the emulsion copolymer is neutralized. In some cases the thickening can be enhanced up to 40 times the viscosity afforded by the neutralized copolymer alone. A wide range of surfactant type and amount is effective. Generally, the surfactant may be used in an amount of 0.1 to 0.5 parts surfactant per part copolymer, same

basis. Although trace amounts of surfactant may be residually present from the emulsion polymerization of the monomers comprising the emulsion copolymer (for example, whatever may remain of the 1.5 weight percent surfactant on monomers), such amounts of surfactant are not believed to result in any measurable cothickening.

On the basis of an aqueous system containing 0.1 to 5% by weight of copolymer solids, a useful amount of surfactant for optimum cothickening is 0.1 to 1.0% by weight of the total system. As indicated, the amounts of copolymer and surfactant cothickener may vary widely, even outside these ranges, depending on copolymer and surfactant type and other components of the aqueous system to be thickened. However, it is observed that the cothickening reaches a maximum as surfactant is added and then decreases. Hence, it may be uneconomical to employ surfactant in amounts outside the stated concentrations and copolymer/surfactant ratios, but this can be determined in a routine manner in each case.

The preferred method of application of the emulsion copolymer and the surfactant for aqueous thickening is to add in any sequence the copolymer and the surfactant to the medium to be thickened and, after mixing, to introduce an alkaline material to neutralize the acid. This method of applying copolymer emulsion and surfactant to an aqueous system before neutralization may enable one to handle a high solids thickener in a non-viscous state, to obtain a uniform blend, and then to convert to a highly viscous condition by the simple addition of an alkaline material to bring the pH of the system to 7 or above. However, the copolymer in the aqueous system may also be neutralized before addition of the surfactant.

The surfactants which may be used include nonionics and anionics, singly or in combination, the selection necessarily depending upon compatibility with other ingredients of the thickened or thickenable dispersions of the invention. Cationic and amphoteric surfactants may also be used provided they are compatible with the copolymer and other ingredients of the aqueous system, or are used in such small amounts as not to cause incompatibility.

Suitable anionic surfactants that may be used include the higher fatty alcohol sulfates such as the sodium or potassium salt of the sulfates of alcohols having from 8 to 18 carbon atoms, alkali metal salts or amine salts of high fatty acid having 8 to 18 carbon atoms, and sulfonated alkyl aryl compounds such as sodium dodecyl benzene sulfonate. Examples of nonionic surfactants include alkylphenoxypolyethoxyethanols having alkyl groups of 7 to 18 carbon atoms and 9 to 40 or more oxyethylene units such as octylphenoxypolyethoxyethanols, dodecylphenoxypolyethoxyethanols; ethylene oxide derivatives of long-chain carboxylic acids, such as lauric, myristic, palmitic, oleic; and ethylene oxide condensates of long-chain alcohols such as lauryl or cetyl alcohol.

Examples of cationic surfactants include lauryl pyridinium chloride, octylbenzyltrimethylammonium chloride, dodecyltrimethylammonium chloride, and condensates of primary fatty amines and ethylene oxide.

The foregoing and numerous other useful nonionic, anionic, cationic, and amphoteric surfactants are described in the literature, such as "McCutcheon's Detergents & Emulsifiers 1984 Annual, North America Edition", MC Publishing Company, Glen Rock, NJ 07452, U.S.A.

Textile Printing Paste

Textile printing pastes may be prepared using thickeners prepared by the process of the present invention. For example, a water-in-oil clear concentrate may be prepared by dissolving 5 parts of a surfactant, such as sorbitan mono-oleate, in 30 parts by weight of mineral spirits (a hydrocarbon distillate cut having a flash point over 102° C), then adding while stirring 58 parts of one of the emulsion polymers of the present invention at 50% solids and mixing therein 7 parts of 28% ammonium hydroxide to at least partially neutralize the polymer dispersion and thereby thicken it. The resulting composition may be useful as a clear concentrate that can be diluted with 95 to 98 parts of water to form a printing clear. Such a clear can then be mixed with an aqueous emulsion polymer to serve as a binder, and, if desired, with a color concentrate.

A clear textile printing paste may also be prepared according to the following formulation A:

| | | Parts by Weight |
|---|---|---|
| water[1] | | approx. 850 |
| sorbitan mono-oleate | | 2 |
| polyoxyethylene 20 sorbitan mono-oleate | | 2 |
| Varsol 18 | (mineral spirits, Esso) | 10 |
| polymeric epoxidized oil plasticizer | (molecular weight approx. 1000) | 10 |
| thickener (30% solids) | | 12-35 |
| Rhoplex HA-8 | (self-crosslinking acrylic latex polymer binder, Rohm and Haas) | 100 |
| ammonia, (28% by wt.) | | 10 |
| Cymel 303 | (melamine formaldehyde American Cyanamid). | 5 |

1. The amount of water is adjusted to give 1000 parts by weight of clear paste.

A clear resinated thickener system or "clear paste" is prepared by adding premixed surfactants, mineral spirits, and plasticizer to water. 12 to 35 parts liquid thickener are added with stirring, depending on desired viscosity, followed by a binder such as Rhoplex HA-8 polymer latex. Ammonia (28%) is added slowly with increased agitation followed by melamine formaldehyde crosslinkg agent.

A print paste is made by homogenizing 5 parts by weight of dispersed pigment into 95 parts by weight of the clear paste. Final formulated viscosity is commonly between 5,000 to 20,000 cps. (5 to 20 $Nm^{-2}S$) as measured by a Brookfield RVT viscometer at 20 rpm.

Print pastes are prepared using thickeners according to clear paste formulation A above using 12 to 35 parts by weight of 30% solids thickener above, and using 5 parts by weight of Blue Neoprint LAS (Lambertini) mixed with 95 parts of clear paste. The viscosity of the printing paste is adjusted to 15,000 cps (15 $Nm^{-2}S$) (Brookfield RVT, 20 rpm) by adding water. The pigmented printing pastes are evaluated using standard methods detailed in Table VII below.

Clear paste prepared using a thickener of the present invention (Example 3a) shows higher viscosity than that prepared using a prior art thickener (Comparative Example 1).

Pigmented printing pastes prepared using thickener of the present invention (Examples 15 and 16A) show improved color value, migration resistance and rheology in comparison with a printing paste prepared using a thickener of the prior art (Comparative Example 1).

TABLE VII

Textile Printing Paste Performance Properties

| | Comparative Example[1] | Example 3a | Example 15 | Example 16a |
|---|---|---|---|---|
| Crosslinker[1] | 0 | 0 | 0.1 | 0.2 |
| % Hexanol[2] | 0 | 5 | 5 | 5 |
| Viscosity (1% by wt)[3] cps ($Nm^{-2}S^{-1}$) | 57,000 (57) | 109,000 (109) | 36,000 (36) | 19,250 (19.25) |
| % Response 15 m.[4] | 86 | 75 | 90 | 99 |
| Properties: (15,000 cps. (15 $Nm^{-2}S$) paste) | | | | |
| 3A Wash[5] | Good | Fair | Good | Good |
| Crock (wet/dry)[6] | Fair | Fair | Good | Good |
| Migration[7] | Good | Good | Exc. | Exc. |
| Color Value[8] | Fair | Fair | Good | Good |
| Rheology[9] | Good | Fair | Exc. | Exc. |

1. Percent by weight ALMA crosslinker used in preparing polymeric thickener.
2. Percent by weight in process additive used in preparing polymeric thickener.
3. Viscosity of clear paste containing a 1% by weight of thickener measured using a Brookfield RVT viscometer at 20 rpm.
4. Percent of ultimate equilibrium viscosity achieved 15 minutes after mixing the pigmented paste.
5. Color fastness to washing-AATCC (American Association of Textile Colorists and Chemists) Test Method 61-1980.
6. Color fastness to crocking - AATCC Test Method 116-1977.
7. Migration Resistance - 95/5 print paste formulation are printed through a 220 mesh nylon screen onto woven cotton/polyester fabric, Test Fabric 7409, Test Fabrics, Inc., Middlesex, N.J. 08846. The printed fabrics are air-dried and comparisons are made visually against identically prepared Carbopol 846 (B.F.

Goodrich) print pastes. Pigment typically migrates from Carbopol borders to reduce printed sharpness. Carbopol 846 polymer is a solid grade of polyacrylic acid, lightly crosslinked.

8. Color Value - 95/5 print paste formulations are printed through a 220-mesh nylon screen onto woven cotton/polyester fabric, Test fabric 7409. The printed fabrics are dried and cured immediately at 180° C. A comparison of color intensity is made visually against identically prepared Carbopol 846 print paste.

9. Rheology - print paste formulations are compared to Carbopol 846 print pastes, rating the ability of the formulas to flow from an inclined plane. Typically Carbopol is "short" and "creamy" and resists flow.

The following are trademarks which may or may not be registered in some or all of the designated states:
Blue Neoprint, Carbopol, Cymel, Rhoplex, Texanol, Varsol.

## Claims

**1.** A process for the preparation of an aqueous dispersion of copolymeric latex polymer, said process comprising emulsion-polymerizing alpha, beta-ethylenically unsaturated monomer in an aqueous medium, wherein at least some portion of the polymerization occurs in the presence of 3% to 20% by weight based on total monomer of at least one in-process additive selected from the group consisting of ($C_4$-$C_{12}$)alkanols, benzene, toluene, the di($C_1$-$C_2$)alkyl benzenes, and

$(CH_3)_2CHCO_2CH_2C(CH_3)_2CH(OH)CH(CH_3)_2$

wherein said monomer comprises at least one copolymerizable alpha, beta-ethylenically unsaturated surfactant comonomer, at least one copolymerizable alpha, beta-mono-ethylenically unsaturated carboxylic acid comonomer, and at least one comonomer selected from nonionic copolymerizable ($C_2$-$C_{12}$) alpha, beta-ethylenically unsaturated monomer.

**2.** A process as claimed in claim 1, wherein said in-process additive has a molecular weight of less than 500.

**3.** A process as claimed in claim 1 or claim 2, wherein said surfactant comonomer is selected from the compounds of the formula

$H_2C=C(R)-C(O)-O-[C(R^1)H-CH_2-O-]_n-R^2$

wherein
R is H or $CH_3$; $R^1$ is H or $CH_3$; n is at least 2;
$R^2$ is selected from the group consisting of alkyl, aralkyl, alkylaryl, alkylaralkyl, and polycyclic alkyl hydrocarbyl groups having from 12 to 30 carbon atoms.

**4.** A process as claimed in any one of the preceding claims, wherein the copolymerizable alpha, beta-mono-ethylenically unsaturated carboxylic acid monomer is selected from ($C_3$-$C_8$) ethylenically unsaturated carboxylic acid monomers and salts thereof, and is preferably selected from acrylic acid, methacrylic acid, itaconic acid, maleic acid, fumaric acid, citraconic acid, crotonic acid, beta-acryloxypropionic acid and/or mixtures of beta-acryloxypropionic acid and the higher oligomers of acrylic acid.

**5.** A process as claimed in any one of the preceding claims, wherein said nonionic comonomer is selected from the ($C_1$-$C_4$)alkyl esters of acrylic and methacrylic acids.

## Revendications

**1.** Procédé de préparation d'une dispersion aqueuse de polymère obtenu en latex de copolymère , ledit procédé comprenant la polymérisation en émulsion d'un monomère à insaturation éthylénique en alpha-bêta dans un milieu aqueux , au moins une partie de la polymérisation se produisant en présence de 3 % à 20 % en poids , sur la base du monomère total , d'au moins un additif introduit au cours de l'éxécution du procédé et qui est choisi dans l'ensemble consistant en alcanols en $C_4$ à $C_{12}$, benzène, toluène , di-alkyl ( en $C_1$-$C_2$) benzènes ,et

$(CH_3)_2CHCO_2CH_2C(CH_3)_2CH(OH)CH(CH_3)_2$ ;

ledit monomère comprenant au moins un comonomère surfactant à insaturation éthylénique en alpha-bêta copolymérisable , au moins un comonomère acide carboxylique à insaturation monoéthylénique en alpha-bêta copolymérisable , et au moins un comonomère choisi parmi les monomères à insaturation éthylénique en alpha-bêta en $C_2$-$C_{12}$ , copolymérisables , non ioniques.

2. Procédé tel que revendiqué à la revendication 1 , dans le - quel ledit additif introduit pendant l'éxécution du procédé a un poids moléculaire inférieur à 500.

3. Procédé tel que revendiqué à la revendication 1 ou à la revendication 2 , dans lequel ledit comonomère surfactant est choisi parmi les composés de formule

$H_2C=C(R)C\text{-}(O)\text{-}O\text{-}[C(R^1)H\text{-}CH_2\text{-}O\text{-}]_n\text{-}R^2$

dans laquelle

R représente H ou $CH_3$ ; $R^1$ représente H ou $CH_3$ ; n vaut au moins 2;

$R^2$ est choisi dans l'ensemble consistant en groupes hydrocarbyles alkyles, aralkyles , alkylaryles , alkylaralkyles et alkyles polycycliques ayant de 12 à 30 atomes de carbone .

4. Procédé tel que revendiqué dans l'une quelconque des revendications précédentes dans lequel l'acide carboxylique monomère à insaturation éthylénique en alpha-bêta copolymérisable est choisi parmi les acides carboxyliques monomères à insaturation éthylénique en $C_3$ à $C_8$ et leurs sels et il est choisi de préférence parmi l'acide acrylique , l'acide méthacrylique , l'acide itaconique , l'acide maléique , l'acide fumarique, l'acide citraconique , l'acide crotonique , l'acide bêta-acryloxypropionique et/ou des mélanges de l'acide bêta-acryloxypropionique et des oligomères supérieurs de l'acide acrylique .

5. Procédé tel que revendiqué dans l'une quelconque des revendications précédentes , dans lequel ledit comonomère non ionique est choisi parmi les esters alkyliques ( en $C_1$ à $C_4$ ) des acides acrylique et méthacrylique .

## Patentansprüche

1. Verfahren zur Herstellung einer wäßrigen Dispersion eines copolymeren Latexpolymers, wobei man ein alpha, beta-ethylenisch ungesättigtes Monomer in einem wäßrigen Medium der Emulsionspolymerisation unterwirft, wobei zumindest ein Teil der Polymerisation erfolgt in Anwesenheit von 3 bis 20 Gew.-%, bezogen auf das Gesamtmonomer, mindestens eines im Verfahren vorhandenen Additivs, welches ausgewählt wird aus der Gruppe ($C_4$-$C_{12}$)-Alkanole, Benzol, Toluol, den Di($C_1$-$C_2$)-alkylbenzolen und

$(CH_3)_2CHCO_2CH_2C(CH_3)_2CH(OH)CH(CH_3)_2$,

wobei das Monomer mindestens ein copolymerisierbares alpha,beta-ethylenisch ungesättigtes Tensid-Comonomer, mindestens ein copolymerisierbares alpha,beta-monoethylenisch ungesättigtes Carbonsäurecomonomer und mindestens ein Comonomer enthält, welches ausgewählt ist aus nichtionischem copolymerisierbaren ($C_2$-$C_{12}$)-alpha,beta-ethylenisch ungesättigtem Monomer.

2. Verfahren nach Anspruch 1, wobei das im Verfahren vorhandene Additiv ein Molekulargewicht von weniger als 500 hat.

3. Verfahren nach Anspruch 1 oder 2, wobei man das Tensid-Comonomer auswählt aus den Verbindungen der Formel

$H_2C=C(R)\text{-}C(O)\text{-}O\text{-}[C(R^1)H\text{-}CH_2\text{-}O\text{-}]_n\text{-}R^2$,

wobei

R die Bedeutung H oder $CH_3$ hat; $R^1$ die Bedeutung H oder $CH_3$ hat; n mindestens 2 bedeutet; $R^2$ ausgewählt ist aus der Gruppe Alkyl-, Aralkyl-, Alkylaryl-, Alkylaralkyl- und polycyclischen Alkylhydrocarbylgruppen mit 12 bis 30 Kohlenstoffatomen.

4. Verfahren nach einem der vorhergehenden Ansprüche, wobei man das copolymerisierbare alpha,beta-monoethylenisch ungesättigte Carbonsäuremonomer auswählt aus ($C_3$-$C_8$)-ethylenisch ungesättigten Carbonsäuremonomeren und Salzen davon, bevorzugt aus Acrylsäure, Methacrylsäure, Itaconsäure, Maleinsäure, Fumarsäure, Citraconsäure, Crotonsäure, beta-Acryloxipropionsäure und/oder Gemischen aus beta-Acryloxypropionsäure und den höheren Oligomeren von Acrylsäure.

5. Verfahren nach einem der vorhergehenden Ansprüche, wobei man das nichtionische Comonomer auswählt aus den ($C_1$-$C_4$)-Alkylestern von Acrylsäuren und Methacrylsäuren.